# EUROPEAN PATENT APPLICATION

(11) **EP 4 053 656 A2**
(43) Date of publication of application: **07.09.2022**
(21) Application number: 22160239.4
(22) Date of filing: 04.03.2022
(51) Int. Cl.: G05B 19/418, G06Q 10/06

(54) **RESOURCE ALLOCATION SYSTEM FOR MAINTAINING A PRODUCTION FACILITY**

(30) Priority: 05.03.2021 CN 202110244656
(71) Applicant: At&S (China) Co., Ltd., Shanghai 201108 (CN)
(72) Inventor: REID, Wallace, Shanghai (CN); GUO, Hailong, Shanghai (CN); ZHANG, Jianfeng, Shanghai (CN); CHEN, Huogen, Anhui (CN); SUN, Yuanming, Shanghai (CN)
(74) Representative: Qip Patentanwälte Dr. Kuehn & Partner mbB

(57) **Abstract**

A resource allocation system (16) for a production facility (10) stores: a production schedule (32) assigning production tasks (34) to machines (12) of the production facility (10), each production task (34) comprising a production time window during which a machine (12) is occupied with the production task (34); a maintenance schedule (36) assigning maintenance tasks (38) to service resources (22), each maintenance task (38) comprising a maintenance time window during which a machine (12) is occupied with the maintenance task (38); and a maintenance plan (48) comprising maintenance rules (50) for generating maintenance tasks (38), the maintenance rules (50) at least comprising a scheduling rule (50a) from which a time after which a machine (12) has to be maintained is derivable. The resource allocation system (16) is configured for determining maintenance tasks (38) for machines (12) based on the maintenance rules (50), wherein the time window of a maintenance task (38) for a machine (12) is determined from a previous maintenance task (38), the scheduling rule (50a) for the machine (12) and the production tasks (34) for the machine (12), such that the time window of the maintenance task (38) does not overlap with the production tasks (34).

## Description

### FIELD OF THE INVENTION

The invention relates to a resource allocation system for a production facility and to a method for maintaining a production facility with the resource allocation system.

### BACKGROUND OF THE INVENTION

Large production facilities, such as production facilities for printed circuit boards, comprise a lot of different machines for production, testing and packaging of the respective products, which are manufactured there. Maintenance of a production facility is a complex task, since maintenance of a machine may interrupt production. Downtimes of the machines, which may run at irregular times, should be reduced and the resources needed for maintenance should be planned, such that they are available, when maintenance of a machine should take place.

US 2004 093 102 A1 relates to a method for the maintenance of a production plant. Each equipment item has an individual preventive maintenance plan of its own, which contains all inspection and measurement actions of the equipment with their inspection intervals. The mechanics use a portable work means, advantageously a PDA, which provides a wireless connection between the mechanic and the equipment card file located on the application server.

US 2003055666 A1 relates to a computerized system for identification and evaluation of a repair likely to prevent the failure of a mobile asset. The output of the data analysis will be displayed through a web page, and maintenance personnel are notified by an electronic mail message.

US 9519876 B2 relates to a method for providing maintenance to an asset. Asset information in the database is utilized to generate an asset report. The asset report is utilized to track an asset including its location and operation. The generated report may be provided in a visual format, such as a piece of paper, or a graphic user interface displayed on a cellphone, or PDA.

### DESCRIPTION OF THE INVENTION

It is an object of the invention to improve maintenance of a production facility. It is further an object of the invention to reduce downtimes of machines of a production facility caused by maintenance.

These objectives are achieved by the subject-matter of the independent claims. Further exemplary embodiments are evident from the dependent claims and the following description.

A first aspect of the invention relates to a resource allocation system for a production facility. As already mentioned, the production facility may produce a circuit board or more general component carriers for electronic and electric components. The resource allocation system may be a possibly distributed computer system, which may be adapted for performing the method.

The resource allocation system may comprise one or more databases. The resource allocation system stores: a production schedule assigning production tasks to machines of the production facility, each production task comprising a production time window during which a machine is occupied with the production task; a maintenance schedule assigning maintenance tasks to service resources, each maintenance task comprising a maintenance time window during which a machine is occupied with the maintenance task; and a maintenance plan comprising maintenance rules for generating maintenance tasks, the maintenance rules at least comprising a scheduling rule from which a time after which a machine has to be maintained is derivable.

The machines may be adapted for production, packaging, testing, automatic optic inspection, etc. For example, in the case of a circuit board production facility, the machines may include plating, etching, drilling and/or sawing machines.

The production schedule may comprise a list of items and/or records assigning production tasks to the respective machines. A production task may comprise an identifier for the machine to perform the task, a production time window in which the production step defined by the machine is to be performed, and optionally further information defining the production task, such as tools to be used, the product to be processed, the production resources and/or raw materials needed for this, etc. The production schedule may be used for controlling the production facility, for example the products and/or production resources may be transported to the respective machines based on the production schedule. The production schedule may be stored in a database and/or file of the resource allocation system. The production schedule may comprise future production tasks and optionally already performed maintenance tasks, i.e. a history of production tasks.

The maintenance schedule may comprise a list of items and/or records assigning maintenance tasks to service resources. A service resource may be a service technician, a service robot, such as automated guided vehicles, and/or other auxiliary materials, spare parts, accessories, etc. A maintenance task may comprise an identifier for the machine to be maintained, a maintenance time window in which the maintenance is to be performed, and optionally further information defining the maintenance, such as tools to be used, skills and/or abilities needed for the maintenance, the service resources needed for this, etc. The maintenance schedule may be used for controlling the maintenance of the production facility, for example the service resources may be guided and/or transported to the respective machines based on the maintenance schedule. The production schedule may be stored in a database and/or file of the resource allocation system. The maintenance schedule may comprise future maintenance tasks and optionally already performed maintenance tasks, i.e. a history of maintenance tasks.

The maintenance plan may comprise a list and/or records defining maintenance rules for generating maintenance tasks. The maintenance rules may be of different types and may define, how and when maintenance has to be performed. The maintenance rules may be dependent of the type of machine. There may be more than one maintenance rule for a type of machine. The maintenance rules at least comprise a scheduling rule from which a time after which a machine has to be maintained is derivable. For example, a scheduling rule may define a time period, after which a machine has to be maintained. A scheduling rule also may define that a machine has to be maintained after it has processed a specific amount of products and/or after it was working excluding downtimes for a specific time period.

The maintenance plan may be stored in a database and/or file of the resource allocation system.

From the maintenance plan, the maintenance schedule may be generated and/or updated automatically. The generation and/or update of the maintenance schedule may be performed by computer programs stored in the resource allocation system. In particular, the resource allocation system is configured for determining maintenance tasks for machines based on the maintenance rules, wherein the time window of a maintenance task for a machine is determined from a previous maintenance task, the scheduling rule for the machine and the production tasks for the machine, such that the time window of the maintenance task does not overlap with the production tasks.

In a simple case, a scheduling rule defines that a machine has to be maintained regularly after a specific time period and that for maintenance the next free time window for maintenance has to be used. Then, from the maintenance tasks, it is determined, when the machine has been maintained for the last time and therefrom the next earliest time window for maintenance is calculated by adding the specific time period. It is then checked in the production schedule, whether the machine is not occupied with a production task during the next earliest time window and otherwise the time window is moved until this is the case.

In particular, a maintenance task is determined, such that it does not overlap with the production tasks of the respective machine. This may mean that the machine is not occupied with production and/or is not processing a product in the time window of the maintenance task, which may be defined by a starting time and an end time. This may be done by shifting time windows into the past and/or into the future. It also may be that some maintenance rules define that a production time window of a production task may be moved to create a free time period, where a time window for a maintenance task can be placed. Also the production schedule may be changed and/or updated based on the maintenance rules.

The determination of the maintenance tasks may be performed regularly and already determined maintenance tasks may be updated. It may be that the production schedule and/or the maintenance rules change and this may result in a changed maintenance schedule, after determination of the maintenance tasks.

According to an embodiment of the invention, the resource allocation system is further configured for determining whether another machine of the same type is unoccupied, when a possible time window of a maintenance task overlaps a production task of a machine of a specific type. In this case, the production task may be moved to the other machine and the time window of the maintenance task may be set to the possible time window. Many production facilities have machines of the same type, i.e. machines that are adapted for performing the same production tasks. In the case, when the resource allocation system determines a maintenance task for a machine, which is occupied in the time window determined by the resource allocation system, the one or more production tasks, which block maintenance, may be moved to other machines that are not occupied during this time window and that are adapted for taking over the one or more production tasks. In this way it is achieved that the machine to be maintained is not occupied anymore and can be maintained.

Occupied in this context may mean that a production task with a time window overlapping the time window of the maintenance task is present for the specific machine. Analogously, unoccupied in this context may mean that there are no production tasks with a time window overlapping the time window of the maintenance task for the specific machine.

According to an embodiment of the invention, the resource allocation system is further configured for receiving error messages from the machines. The machines may be interconnected with the resource allocation system via a data communication network. A maintenance task may be scheduled for a machine, which has produced an error message. The time window for this task may start at the actual time, when, according to the error message, the machine is not any more able to perform its production task.

According to an embodiment of the invention, the resource allocation system is further configured for generating the production schedule from received orders for products, wherein production tasks are assigned to machines, such that the time window of the production tasks do not overlap with maintenance tasks. The resource allocation system also may be configured for automatically generating the production schedule. This may be done based on orders. An order may define, how many products of a specific type are to be manufactured. The resource allocation system may comprise production rules from which orders may be translated into production tasks. The production rules may define, which production task on which machines have to be performed in which time windows.

According to an embodiment of the invention, the resource allocation system furthermore comprises a plurality of mobile devices for service technicians. The mobile device may be seen as service resources, which are used for directing the service technicians to machines to be maintained and/or for receiving feedback information from the service technicians. A mobile device may be a smartphone or tablet computer.

According to an embodiment of the invention, the resource allocation system is further configured for assigning a maintenance task to a service technician and sending the maintenance task to a mobile device carried by the service technician. For example, some of the maintenance rules define that a specific maintenance task has to be done by a service technician with a specific skill set. The service technicians and their skills may be stored in the resource allocation system, in particular in a database thereof. When such a maintenance task is generated, a suited service technician may be searched and assigned to the task.

According to an embodiment of the invention, the resource allocation system is further configured for generating an acknowledgment message with the mobile device and marking the maintenance task as being finished, when the machine assigned to the maintenance task has been maintained by the service technician. In such a way, also not automatically performed maintenance tasks can be tracked.

According to an embodiment of the invention, the resource allocation system is further configured for determining a maintenance time for the maintenance task with the mobile device. For example, the time in which the service technician stays at the machine to be maintained can be measured and used as maintenance time. The maintenance rule, which was used for generating the maintenance task, which resulted in the maintenance for which the maintenance time is determined, may be updated based on the determined maintenance time.

According to an embodiment of the invention, the resource allocation system furthermore stores a resource pool, wherein at least one of available service resources, actual positions of service resources and properties of service resources are stored. The resources may be autonomously movable service devices, such as robots and/or service technicians. These resources together with their properties may be stored in the resource pool, which may be a file and/or a table in a database, for example in the form of resource pool items. The properties of a service resource may define, which maintenance tasks may be performable by the service resource. The resource pool also may store, when a service resource is available, i.e. not occupied with a maintenance task, or not. To this end, a resource schedule may be determined. The resource pool may store an actual position of a service resource in the production facility. With such information, ways of service resources may be reduced and/or optimized.

According to an embodiment of the invention, a maintenance task for a machine stores at least one of a site of the machine and/or necessary properties for maintaining the machine. The resource allocation system may be then further configured for selecting a service resource for performing the task based on the resource pool. It may be that the service resource (for example the service technician), which is not occupied during the time window of the maintenance task, which has the abilities to perform the maintenance and which is nearest to the machine, is chosen.

According to an embodiment of the invention, a position of a service technician is determined with a mobile device carried by the service technician. This may be done with a GPS tracker.

According to an embodiment of the invention, the resource allocation system is further configured for registering the service technician at the machine by acquiring an identifier from the machine at a site of the machine with the mobile device, which is carried by the service technician. For example, a computer-readable code encoding the identifier may be scanned at the site of the machine with the mobile device. The resource allocation system may be informed that the service technician has reached the machine and/or may determine, whether this is the correct machine to be maintained. The resource allocation system furthermore may be configured for unlocking the machine by verifying that the correct machine has been selected and sending a release message to the machine. It may be that a cover of the machine can solely be opened, when the machine is unlocked.

According to an embodiment of the invention, maintenance rules and corresponding maintenance tasks store information on spare parts and/or missing resources needed for performing the maintenance task. These spare parts may be transported to the site of the machine, such that they are available, when maintenance starts. The resource allocation system may be configured for determining from the maintenance tasks in the maintenance schedule missing resources needed for performing the maintenance tasks. These resources may be ordered in advance of the maintenance. A need of future missing resources may be generated and/or predicted. Corresponding orders for these missing resources may be generated.

A further aspect of the invention relates to a method for maintaining a production facility with a resource allocation system, the method comprises steps, such as described above and below. It has to be understood that features of the method as described above and below may be features of the resource allocation system as described above and below, and vice versa.

Further aspects of the invention relate to a computer program, which, when being executed by a processor, is adapted to carry out the steps of the method for maintaining a production facility, and to a computer-readable medium, in which such a computer program is stored. The computer program may be stored in one or more computing devices of the resource allocation system and/or may be executed by one or more computing devices of the resource allocation system.

A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a production facility with a resource allocation system according to an embodiment of the invention.
Fig. 2 schematically shows a database for a resource allocation system according to an embodiment of the invention.
Fig. 3 shows a flow diagram for a method for maintaining a production facility.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

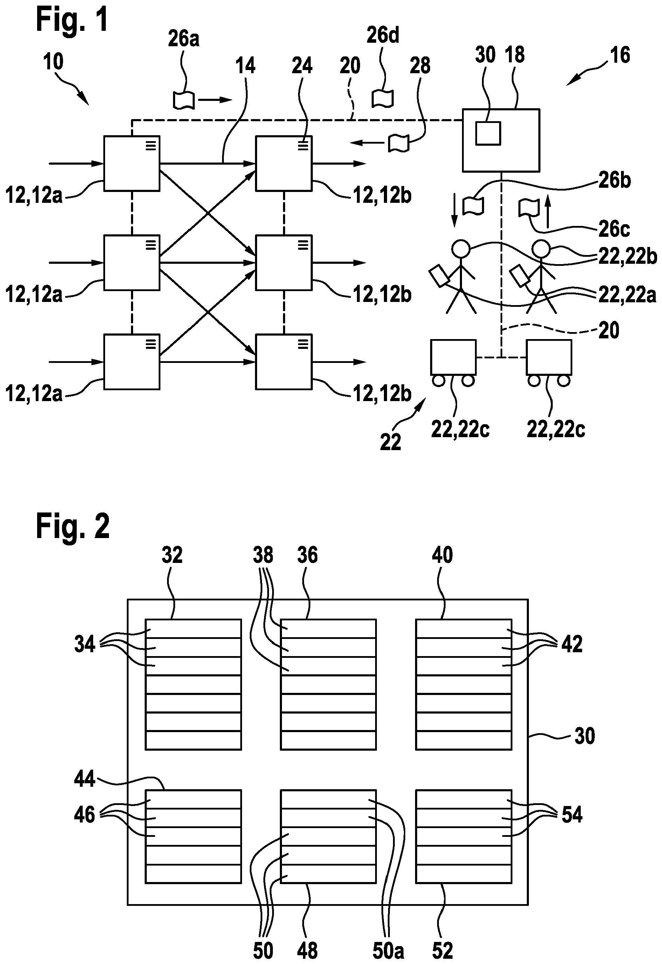

Fig. 1 shows a production facility 10 with a plurality of production machines 12. For example, in the production facility 10, circuit boards are manufactured. However, any other type of products 14 are conceivable. The products 14 and the materials and parts, which are processed, are shown as arrows between the machines 12.

There may be production machines 12 of the same type. As example, production machines 12a of a first type and production machines 12b of a second type are shown. The same production steps may be performed with the same type pf machine 12a, 12b. For example, in the case of a circuit board production facility 10, the machines 12a may be etching machines and the machines 12b may be drilling machines.

The production facility 10 comprises a control and resource allocation system 16, which may comprise a central server 18, which is interconnected via a data communication network 20 with the machines 12. The central server 18 is shown as example, the task and method steps performed by the central server 18 also may be performed by several servers and/or virtual servers in a cloud computing facility.

The resource allocation system 16 furthermore comprises service resources 22, such as mobile devices 22a for service technicians 22b and/or service robots 22c.

Some of the service resources 22 may be interconnected via the data communication network 20 with the central server 18, such as the mobile devices 22a and the service robots 22c.

The resource allocation system 16 or a bigger system into which the resource allocation system 16 is integrated may control the machines 12 with control data 28 sent to the machines 12. Also control data 28 may be sent to specific service resources 22, such as the control robots 22.

The data communication network 20 may be used for exchanging messages between the machines 12, the central server 18 and specific service resources 22. For example, an error message 26a may be sent from a machine 12 to the central server 18 for indicating that a problem has occurred and that maintaining may be necessary. A corresponding maintenance message 26b, which may comprise information on a maintenance task, may be sent to a service resource 22, which then may be guided to the machine 12. When the machine 12 has to be stopped for maintenance, a release message 26d may be sent from a mobile device 22a to the machine 12, which then causes the machine 12 to stop and/or to unlock its cover, etc. An acknowledgment message 26c may be sent from a service resource 22, such as a mobile device 22a to the central server 18, when maintenance has been finished.

The mobile devices 22a also may be used for tracking the service technicians 22b via a positioning system and/or for further tasks, such as identifying machines 12. For example, a computer-readable code and/or identifier 24 may be attached to at least some of the machines 12. The identifier 24 may be scanned with the mobile device 22a and, for example, further information of the machine 12 may be loaded into the mobile device 22a from the central server 18 with the aid of the identifier 24.

The resource allocation system 16 is configured for automatically planning the maintenance of the production facility 10 and for supporting the maintenance. This is done with information stored in a database 30. In Fig. 1, a single database 30 is shown. However, it is also possible that the content of the database 30 is distributed among several databases and/or several computing devices.

The resource allocation system 16 may comprise a SAP system. The database 30 may download a routine service schedule from the SAP system by BAPI and may send them out to certain mobile devices 22a, which have been pre grouped by machine type. The technicians may perform routine services according to the schedule on the mobile devices 22a, scan QR codes on production machines 12 to confirm the service eligibility. An operator may issue a service request on a website interface. Related information may be transferred to the SAP system and generate an order immediately. A related order may be sent to certain mobile devices 22a based on priority like technician availability by KABA, experience etc.

Spare parts list for routine service may be sent in advance to a warehouse of the production facility 10 for efficiency improvement. Furthermore, a list of high consumption parts of the production machines 12 may be provided for reference. Spare parts life time may be provided to a supplier ranking system and/or broken spare parts may be sent to a supplier first for repair.

All service data may be stored in the mobile devices 22a in real time during service including picture evidence, after production buyoff with WWID scanning. All data may be transferred back to database 30 and SAP system.

The central server 18 may capture machine running data and may work out accurate service charts for service time control. Furthermore, the central server 19 may stop a production machine 12, if service is overdue and/or key parameters are out of a control limit.

Fig. 2 shows the content of the database 30 in more detail. The database 30 may be a relational database and the items depicted in Fig. 2 all may be tables with records. However, it is also possible that the items are stored in other formats, such as in files.

In the database 30, a production schedule 32 comprising production tasks 34 is stored. The production schedule 32 is used for assigning production tasks 34 to machines 12 of the production facility 10. Each production task 34 may comprise an identifier for the machine 12, to which the production task 34 is assigned, a production time window, during which the machine 12 is occupied with the production task 34, and optional further data, such as defining the production task 34, the resources needed for this, the type of product to be processed, etc.

Furthermore, the database 30 stores a maintenance schedule 36 with maintenance tasks 38. The maintenance schedule 36 is used for assigning maintenance tasks 38 to service resources 22. Each maintenance task 38 may comprise an identifier for the machine 12, to which the maintenance task 38 is assigned, a maintenance time window, during which the machine 12 is occupied with the maintenance task 38, and optional further data, such as defining the maintenance task 38, the service resources 22 needed for this, the spare parts and/or special tools needed for performing the maintenance task 38, etc. A maintenance task 38 for a machine 12 also may store at least one of a site of the machine 12 and necessary properties for maintaining the machine 12.

Some maintenance tasks 38 may comprise repair records stored in the central database. All the repair records may be categorized by module, station, malfunction description, repair time etc. From daily repair records a logbook for technicians may be made, which may be handed over to the technicians. The resource allocation system 16 may pick up the repair records and may push them to the mobile devices 22a for share. Experienced technicians may be preferred to get certain repair requests.

Information on the service resources 22 may be stored in a resource pool 40. The resource pool 40 may comprise resource pool items 42 and/or may be stored in the database 30. Each resource pool item 42 may be assigned to a resource 22. There may be resource pool items 42 for mobile devices 22a, service technician 22b and/or service robots 22c. Each resource pool item 42 may comprise an identifier for the respective service resource 22, the type of service resource and optional further data, such as, whether the service resource 22 is actually available, i.e. not occupied, an actual position of the service resources 22, properties of service resources 22, etc.

The production schedule 32 may be automatically generated from production plan 44, which comprises production rule 46 and/or which may be also stored in the database 30. The production rules 46 define, how production tasks 34 have to be generated based on products to be processed. Production rules 46 may be assigned to different types of products and/or different types of machines. The production time windows of the production tasks 34 may be determined based on the production rules 46.

It may be that an order list 52 with orders 54 is stored in the database 30. The production tasks 34 may be generated based on the production rules 46 in combination with the orders 54.

An order 54 may have an order status, which is stored in the database 30. All open/ongoing orders 54 and/or the order list 52 may be listed on a mobile devices 22a of a foreman, for example sorted by elapsed time. The foreman may arrange resources accordingly, when he identifies a problem.

Furthermore, a maintenance plan 48 comprising maintenance rules 50 for generating maintenance tasks 38 may be stored in the database 30. The maintenance rules 50 define, how maintenance tasks 38 have to be generated. Maintenance rules 50 may be assigned to machines 12, type of machines 12 and/or service resources 22. Each maintenance rule 50 may comprise an identifier for a machine 12 and/or type of machine 12, to which the maintenance rule 50 is assigned, and optional further data, such as defining the maintenance rule 50, the service resources 22 needed for this, the spare parts and/or special tools needed for performing the maintenance task 38, etc. A maintenance rule 50 also may store necessary properties for maintaining the machine 12 and/or type of machine 12. At least some maintenance rules 50 may comprise data for determining a maintenance time and/or a maintenance time window for the maintenance task 38 to be generated. Such maintenance rules may be called scheduling rules 50a. A maintenance time may be the time after which a machine 12 has to be maintained. The maintenance time window may be the time, how long the maintenance is assumed to take place.

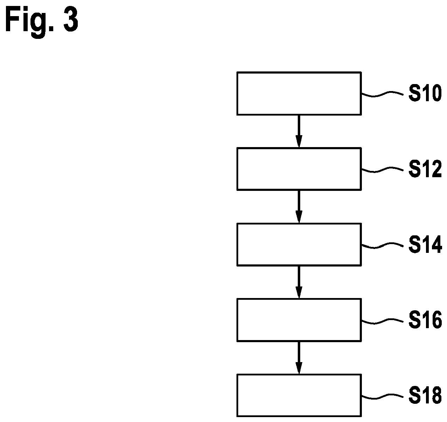

Fig. 3 shows a flow diagram for a method for maintaining the production facility 10 with the resource allocation system 16. The method may be performed by central server 18 together with the service resources 22.

In step S10, the production schedule 32 is generated from received orders 54 for products. When maintenance tasks 38 are already present, production tasks 34 are assigned to machines 12, such that the time window of the production tasks 34 do not overlap with maintenance tasks 38. However, it also may be that maintenance tasks 38 are shifted, when production has a higher priority as maintenance. Flags for defining priority of the maintenance may be stored in a maintenance task 38.

In step S12, maintenance tasks 38 for machines 12 based on the maintenance rules 50 are determined. The time window of a maintenance task 38 for a machine 12 may be determined from a previous maintenance task 38, the scheduling rule 50a for the machine 12 and the production tasks 34 for the machine 12, such that the time window of the maintenance task 38 does not overlap with the production tasks 34.

It may be that, when the maintenance task 38 has a high priority, which may be defined in the corresponding maintenance rule 50 and/or scheduling rule 50a, from which the maintenance task 38 is generated, also production tasks 34 are shifted.

It may also be that, when a possible time window of a maintenance task 38 overlaps a production task 34 of the machine 12, it is determined, whether another machine 12 of a same type is unoccupied. When this is the case, the production task 34 may be moved to the other machine 12 and the time window of the maintenance task 38 may be set to the possible time window.

The above described maintenance tasks 38 may be generated and/or checked regularly. Specific maintenance rules 50 may have a flag that they are used during a regular generation of maintenance tasks 38.

A further possibility of generating maintenance tasks 38 is based on errors, which accidently occur in machines 12. When an error message 26 from a machine 12 is received, it may be checked, whether there is a maintenance rule 50 for this machine 12, which should be used in the case of an error and/or in the case of type of error identified with the error message 26. In this case, a maintenance task 38 may be generated from this maintenance rule 50 and/or a maintenance task 38 may be scheduled for the machine 12, which has produced the error message 26.

In step S14, the service resources 22 needed for maintenance are allocated and optionally assigned. It may be that a maintenance task 38 defines solely a type of service resources 22 needed and/or properties of the service resources 22 needed. In this case, the one or more service resources 22 needed for the maintenance defined by the maintenance tasks 38 may be selected. This may be done on the resource pool 40, in which the desired properties and/or availabilities are stored.

Furthermore, from the maintenance tasks 38 in the maintenance schedule 36, missing resources needed for performing the maintenance tasks 38 may be determined. For example, tools and/or spare parts needed be determined and compared with the available tools and/or spare parts.

A service resource 22, which is assigned to a maintenance task 38, may be selected based on its actual position. The positions of the service technicians 22b may be determined with the respective mobile devices 22a. The positions of the service robots 22c may be known per se based on their control. A maintenance task 38 may be assigned to a service resource 22, which is nearest to the machine 12 to be maintained and/or which will be nearest at the time of maintenance.

In step S16, when a maintenance task 38 has been assigned to a service resource 22, information in the maintenance task 38 and/or associated therewith may be sent to the service resource 22 via the data communication network 20. For example, control data 26 for a service robot 22c may be generated based on the maintenance task and sent to the service robots 22c.

When a maintenance task 38 has been assigned to a service technician 22b, the maintenance task 38 and optionally information derived therefrom may be sent in a maintenance message 26b to the mobile device 22a carried by the service technician 22b. The service technician 22b may read the information and, when the time for maintenance has come, may go to the site of the respective machine 12.

In step S18, the service technician 22b may be registered at the machine 12 by acquiring the identifier 24 from the machine 12 at the site of the machine 12 with the mobile device 22a, for example by scanning the identifier 24. The identifier 24 may be sent to the central server 18, which verifies, whether the service technician 22b has arrived at the correct machine 12. It also may be that the machine 12 is unlocked for maintenance, when it has been verified that the correct machine 12 has been selected. Therefore, a release message 26d may be sent to the machine 12 via the data communication network 20.

In the end, when the machine 12 assigned to the maintenance task 38 has been maintained by the service technician 22b, an acknowledgment message 26c may be generated with the mobile device 22a and sent to the central server 18 via the data communication network 20. The maintenance task 38 may be marked as being finished in the database 30.

With the mobile device 22a of the service technician 22b, a real maintenance time for the maintenance task 38 may be determined. The real maintenance time may be the time, how long the service technician 22b really needs for performing maintenance as defined in the maintenance task 38. The real maintenance time may be sent to the central server 18, for example in the acknowledgment message 26c. The real maintenance time may be used for updating a maintenance rule 50, which has been used for generating the maintenance task 38.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: production facility
- 12: production machine
- 12a: production machine of first type
- 12b: production machine of second type
- 14: product
- 16: resource allocation system
- 18: central server
- 20: data communication network
- 22: service resource
- 22a: mobile device
- 22b: service technician
- 22c: service robot
- 24: identifier
- 26a: error message
- 26b: maintenance message
- 26c: acknowledgment message
- 26d: release message
- 28: control data
- 30: database
- 32: production schedule
- 34: production task
- 36: maintenance schedule
- 38: maintenance task
- 40: resource pool
- 42: resource pool item
- 44: production plan
- 46: production rule
- 48: maintenance plan
- 50: maintenance rule
- 50a: scheduling rule
- 52: order list
- 54: order

## Claims

1. A resource allocation system (16) for a production facility (10),
wherein the resource allocation system (16) stores:
a production schedule (32) assigning production tasks (34) to machines (12) of the production facility (10), each production task (34) comprising a production time window during which a machine (12) is occupied with the production task (34);
a maintenance schedule (36) assigning maintenance tasks (38) to service resources (22), each maintenance task (38) comprising a maintenance time window during which a machine (12) is occupied with the maintenance task (38);
a maintenance plan (48) comprising maintenance rules (50) for generating maintenance tasks (38), the maintenance rules (50) at least comprising a scheduling rule (50a) from which a time after which a machine (12) has to be maintained is derivable;
wherein the resource allocation system (16) is configured for:
determining maintenance tasks (38) for machines (12) based on the maintenance rules (50), wherein the time window of a maintenance task (38) for a machine (12) is determined from a previous maintenance task (38), the scheduling rule (50a) for the machine (12) and the production tasks (34) for the machine (12), such that the time window of the maintenance task (38) does not overlap with the production tasks (34).

2. The resource allocation system (16) of claim 1,
wherein the resource allocation system (16) is further configured for:
when a possible time window of a maintenance task (38) overlaps a production task (34) of the machine (12), determining whether another machine (12) of a same type is unoccupied, moving the production task (34) to the other machine (12) and setting the time window of the maintenance task (38) to the possible time window.

3. The resource allocation system (16) of claims 1 and 2,
wherein the resource allocation system (16) is further configured for:
receiving error messages (26) from the machines (12);
scheduling a maintenance task (38) for a machine (12), which has produced an error message (26).

4. The resource allocation system (16) of one of the previous claims,
wherein the resource allocation system (16) is further configured for:
generating the production schedule (32) from received orders (54) for products, wherein production tasks (34) are assigned to machines (12), such that the time window of the production tasks (34) do not overlap with maintenance tasks (38).

5. The resource allocation system (16) of one of the previous claims,
wherein the resource allocation system (16) furthermore comprises:
a plurality of mobile devices (22a) for service technicians (22b);
wherein the resource allocation system (16) is further configured for:
assigning a maintenance task (38) to a service technician (22b) and sending the maintenance task (38) in a maintenance message (26b) to a mobile device (22a) carried by the service technician (22b);
when the machine (12) assigned to the maintenance task (38) has been maintained by the service technician (22b), generating an acknowledgment message (26c) with the mobile device (22a) and marking the maintenance task (38) as being finished.

6. The resource allocation system (16) of claim 5,
wherein the resource allocation system (16) is further configured for:
determining a maintenance time for the maintenance task (38) with the mobile device (22a);
updating a maintenance rule (50) for generating the maintenance task (38) based on the determined maintenance time.

7. The resource allocation system (16) of one of the previous claims,
wherein the resource allocation system (16) furthermore stores:
a resource pool (40), wherein at least one of available service resources (22), actual positions of service resources (22) and properties of service resources (22) are stored in the resource pool (40);
wherein a maintenance task (38) for a machine (12) stores at least one of a site of the machine (12) and necessary properties for maintaining the machine (12);
wherein the resource allocation system (16) is further configured for:
selecting a service resource (22) for performing the maintenance task (38) based on the resource pool (40).

8. The resource allocation system (16) of claim 7,
wherein a position of a service technician (22b) is determined with a mobile device (22a).

9. The resource allocation system (16) of one of the previous claims,
wherein the resource allocation system (16) is further configured for:
registering a service technician (22b) at the machine (12) by acquiring an identifier (24) from the machine (12) at a site of the machine (12) with the mobile device (22a);
unlocking the machine (12) by verifying that the correct machine has been selected and sending a release message (26d) to the machine (12).

10. The resource allocation system (16) of one of the previous claims,
wherein maintenance rules (50) and corresponding maintenance tasks (38) store information on spare parts needed for performing the maintenance task (38);
wherein the resource allocation system (16) is configured for:
determining from the maintenance tasks (38) in the maintenance schedule (36) missing resources needed for performing the maintenance tasks (38).

11. A method for maintaining a production facility (10) with a resource allocation system (16),
wherein the resource allocation system (16) stores:
a production schedule (32) assigning production tasks (34) to machines (12) of the production facility (10), each production task (34) comprising a production time window during which a machine (12) is occupied with the production task (34);
a maintenance schedule (36) assigning maintenance tasks (38) to service resources (22), each maintenance task (38) comprising a maintenance time window during which a machine (12) is occupied with the maintenance task (38);
a maintenance plan (48) comprising maintenance rules (50) for generating maintenance tasks (38), the maintenance rules (50) at least comprising a scheduling rule (50a) from which a time after which a machine (12) has to be maintained is derivable;
wherein the method comprises:
determining maintenance tasks (38) for machines (12) based on the maintenance rules (50), wherein the time window of a maintenance task (38) for a machine (12) is determined from a previous maintenance task (38), the scheduling rule for the machine (12) and the production tasks (34) for the machine (12), such that the time window of the maintenance task (38) does not overlap with the production tasks (34).

12. A computer program, which, when being executed by a processor, is adapted to carry out the steps of the method of claim 11.

13. A computer-readable medium, in which a computer program according to claim 12 is stored.
